(19) Europäisches Patentamt
European Patent Office
Office européen des brevets

(11) Veröffentlichungsnummer: **0 025 164**
**B1**

(12) # EUROPÄISCHE PATENTSCHRIFT

(45) Veröffentlichungstag der Patentschrift: **13.04.83**

(51) Int. Cl.³: **C 09 B 33/153,** D 06 P 1/18, D 06 P 3/00, D 21 H 1/46

(21) Anmeldenummer: **80105050.1**

(22) Anmeldetag: **26.08.80**

(54) **Disazoverbindungen, Verfahren zu ihrer Herstellung und ihre Verwendung.**

(30) Priorität: **06.09.79 DE 2935974**

(43) Veröffentlichungstag der Anmeldung:
**18.03.81 Patentblatt 81/11**

(45) Bekanntmachung des Hinweises auf die Patenterteilung:
**13.04.83 Patentblatt 83/15**

(84) Benannte Vertragsstaaten:
**BE CH DE FR GB IT LI NL**

(56) Entgegenhaltungen:
**FR-A-2 079 234**
**FR-A-2 220 567**
**FR-A-2 237 937**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt/Main 80 (DE)**

(72) Erfinder: **Hunger, Klaus, Dr., Johann-Strauss-Strasse 35, D-6233 Kelkheim (Taunus) (DE)**

**EP 0 025 164 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Disazoverbindungen, Verfahren zu ihrer Herstellung und ihre Verwendung

Gegenstand der Erfindung sind Disazoverbindungen der Formel I

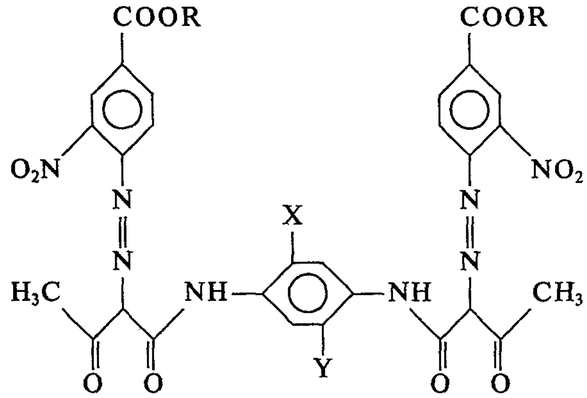

(I)

in der R einen Alkylrest mit 1 bis 4 C-Atomen, X und Y ein Wasserstoff-, Chlor- oder Bromatom, eine Methyl-, Ethyl-, Methoxy- oder Ethoxygruppe bedeuten.

Die Erfindung betrifft weiterhin ein Verfahren zur Herstellung der genannten Disazoverbindungen, das dadurch gekennzeichnet ist, daß man Verbindungen der Formel II

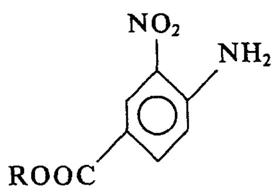

(II)

in der R die für Formel I genannte Bedeutung aufweist, diazotiert und zwei Äquivalente der erhaltenen Diazoniumverbindung oder des Gemisches zweier oder mehrerer Diazoniumverbindungen aus Verbindungen des Formel II mit einem Äquivalent einer Verbindung oder eines Gemisches zweier oder mehrerer Verbindungen der Formel III

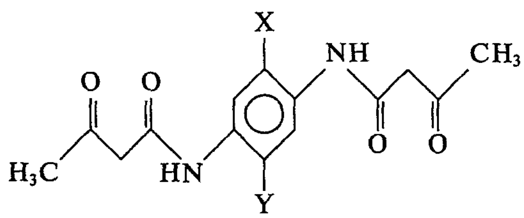

(III)

in der X und Y die für Formel I genannte Bedeutung aufweisen, kuppelt.

Die Erfindung betrifft weiterhin die Verwendung der erfindungsgemäßen Disazoverbindungen als Farbmittel, insbesondere als Pigmente.

Als Amine der Formel II können beispielsweise eingesetzt werden:

3-Nitro-4-aminobenzoesäuremethylester,
3-Nitro-4-aminobenzoesäureethylester,
3-Nitro-4-aminobenzoesäure-n-propylester,
3-Nitro-4-aminobenzoesäure-isopropylester,
3-Nitro-4-aminobenzoesäure-n-butylester,
3-Nitro-4-aminobenzoesäure-isobutylester und
3-Nitro-4-aminobenzoesäure-1'-methyl-propylester.

Die Diazotierung des Amins der Formel II kann beispielsweise mit Alkalinitriten oder niederen Alkylnitriten mit ausreichend starken Säuren, insbesondere einer Mineralsäure, aber auch mit Nitrosylschwefelsäure erfolgen. Es kann hierbei als auch bei der anschließenden Kupplung von Nutzen sein, einen Zusatz von oberflächenaktiven Mitteln zu verwenden, wie zum Beispiel nichtionogenen, anionaktiven oder kationaktiven Dispergiermitteln.

Als Kupplungskomponenten werden beispielsweise verwendet:

1,4-Bisacetoacetylaminobenzol,
1,4-Bisacetoacetylamino-2-chlorbenzol,
1,4-Bisacetoacetylamino-2,5-dichlorbenzol,
1,4-Bisacetoacetylamino-2-methylbenzol,
1,4-Bisacetoacetylamino-2,5-dimethylbenzol,
1,4-Bisacetoacetylamino-2-methoxybenzol,
1,4-Bisacetoacetylamino-2,5-dimethoxybenzol,
1,4-Bisacetoacetylamino-2-brombenzol,
1,4-Bisacetoacetylamino-2,5-dibrombenzol,
1,4-Bisacetoacetylamino-2-ethylbenzol,
1,4-Bisacetoacetylamino-2-ethoxybenzol,
1,4-Bisacetoacetylamino-2-methoxy-5-methylbenzol,
1,4-Bisacetoacetylamino-2-chlor-5-methylbenzol und
1,4-Bisacetoacetylamino-2-chlor-5-methoxybenzol.

Diazotierung und Kupplung können auch in Gegenwart geeigneter organischer Lösemittel durchgeführt werden, wie zum Beispiel Eisessig, niederen Alkanolen, Dioxan, Formamid, Dimethylformamid, Dimethylsulfoxid, Pyridin oder N-Methylpyrrolidon. Zur Erzielung der vollen Farbstärke ist es oft zweckmäßig, das Kupplungsgemisch einige Zeit zu erhitzen, beispielsweise zu kochen oder unter Druck bei Temperaturen über 100°C zu halten, gegebenenfalls in Gegenwart von organischen Lösemitteln, wie niederen Alkanolen, beispielsweise Ethanol oder Isobutanol, Halogenaromaten wie Chlorbenzol oder Dichlorbenzol, zum Beispiel o-Dichlorbenzol, Dimethylformamid, N-Methylpyrrolidon oder in Gegenwart von Harzseife. Besonders reine und farbstarke Pigmente erhält man mit den erfindungsgemäßen Produkten, wenn man nach der Kupplung die feuchten Preßkuchen oder die getrockneten Pulver einer thermischen Nachbehandlung mit organischen Lösemitteln, wie Alkoholen, vor allem niederen Alkanolen, Pyridin, Eisessig, Dimethylformamid, N-Methylpyrrolidon, Dimethylsulfoxid, Halogenaromaten wie Chlorbenzol oder Dichlorbenzolen, zum Beispiel o-Dichlorbenzol, oder Nitrobenzol unterwirft oder eine Mahlung der Pigmente unter Zusatz von Mahlhilfsmitteln anschließt.

Der Begriff »nieder« im Zusammenhang mit Alkylresten umfaßt Gruppen mit 1 bis 6, insbesondere 1 bis 4 C-Atomen.

Die Herstellung der Pigmente kann auch in Gegenwart eines Trägermaterials, beispielsweise von Schwerspat, erfolgen.

Die neuen Verbindungen sind wasserunlöslich und unlöslich in den üblichen organischen Lösemitteln und eignen sich zur Pigmentierung von Druckfarben, Farblacken und Dispersionsanstrichfarben, zum Färben von Kautschuk, Kunststoffen und natürlichen oder synthetischen Harzen.

Sie sind ferner geeignet für den Pigmentdruck auf Substraten, insbesondere Textilfasermaterialien oder anderen flächenförmigen Gebilden, wie beispielsweise Papier.

Die Pigmente können auch für andere Anwendungsgebiete, zum Beispiel in fein verteiler Form zum Anfärben von Kunstseide aus Viskose oder Celluloseethern bzw. -estern, Polyamiden, Polyurethanen, Polyglykolterephthalaten oder Polyacrylnitrilen in der Spinnmasse oder zum Färben von Papier, verwendet werden.

Die Pigmente sind farbstark und lassen sich in den genannten Medien gut verarbeiten. Die Färbungen weisen sehr gute Licht- und Wetterechtheiten auf und sind gegen den Einfluß von Chemikalien, vor allem Lösemitteln, beständig.

Gegenüber den aus der FR-A-2 079 234 bekannten stellungsisomeren Verbindungen unterscheiden sich die erfindungsgemäßen Verbindungen durch verbesserte Echtheitseigenschaften, insbesondere durch eine höhere Ausblutechtheit.

In den folgenden Beispielen beziehen sich die Prozentangaben auf das Gewicht. Temperaturen sind in °C angegeben.

## Beispiel 1

10,5 g 3-Nitro-4-aminobenzoesäureethylester werden in 80 ml Eisessig und 15 ml 31%iger Salzsäure eine Stunde bei 10° verrührt. Man läßt dann 10 ml einer 5 N-Natriumnitritlösung schnell zulaufen und rührt 30 Minuten nach (Diazolösung). 7,3 g 1,4-Bisacetoacetylaminobenzol werden in 200 ml Wasser suspendiert und mit 5 ml 33%iger Natronlauge gelöst. Zur Kupplung wird die obige Diazolösung vorgelegt und mit 200 ml Eiswasser und 10 ml einer 10%igen wäßrigen Lösung von Oleylalkohol, der mit 30 Äquivalenten Ethylenoxid umgesetzt ist, versetzt. Innerhalb einer Stunde tropft man jetzt die alkalische Lösung des 1,4-Bisacetoacetylaminobenzols zu, wobei man mit einer 5%igen wäßrigen Natriumacetatlösung den pH-Wert bei ca. 3–4 hält. Nach Beendigung der Kupplung rührt man 30 Minuten nach, saugt ab und wäscht mit Wasser salzfrei.

Der Preßkuchen wird in 800 ml Dimethylformamid suspendiert und nach Erhitzen auf 130° 10 Minuten bei dieser Temperatur gehalten. Man saugt erneut ab, wäscht mit Dimethylformamid,

Methanol und Wasser und trocknet. Ausbeute: 17,2 g eines farbstarken rotstichigen Gelbpigmentes der Formel

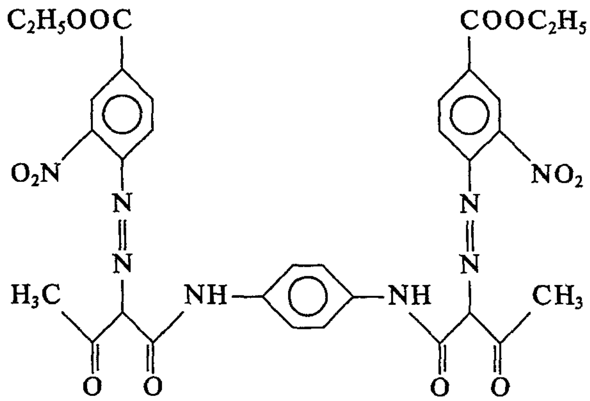

Beispiel 2

19,6 g 3-Nitro-4-aminobenzoesäuremethylester werden in 160 ml Eisessig und 30 ml 30%iger Salzsäure verrührt. Man kühlt auf 10° ab und gibt schnell unter die Oberfläche der Mischung eine Lösung von 20 ml 5 N-Natriumnitrit hinzu (Diazokomponente).

16 g 1,4-Bisacetoacetylamino-2-methoxybenzol werden in 300 ml Wasser mit 10 ml 33%iger Natronlauge gelöst (Kupplungskomponente). Zum Kuppeln werden 300 ml Eiswasser, 30 ml 2 N-Natriumacetatlösung, 6 ml Eisessig und 20 ml einer 10%igen wäßrigen Lösung von Oleylalkohol, der mit 30 Äquivalenten Ethylenoxid umgesetzt ist, vorgelegt. Bei 10° laufen jetzt die Lösungen der Diazo- und Kupplungskomponente innerhalb einer Stunde gleichzeitig zur vorgelegten Puffermischung. Nach dem Auskuppeln wird 30 Minuten auf 80° erhitzt und abgesaugt. Das Pigment wird bei 70° getrocknet und kurz in 400 ml N-Methylpyrrolidon auf 110° erhitzt, abgesaugt, mit Methanol und Wasser gewaschen und getrocknet. Man erhält 34,8 g eines rotstichig-gelben Pigmentes hoher Farbstärke mit der Formel

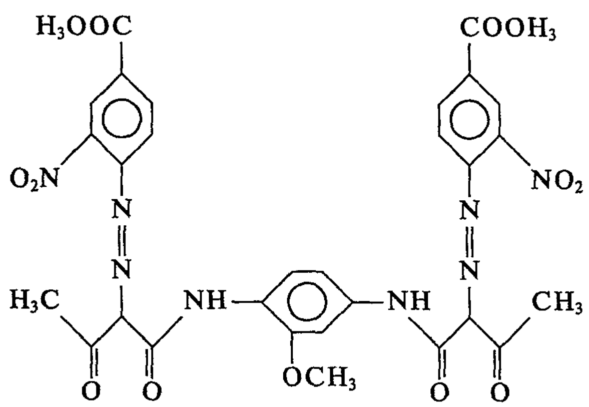

In der nachstehenden Tabelle sind weitere Beispiele von Disazoverbindungen beschrieben, die durch Kuppeln der diazotierten aromatischen Amine (Diazokomponente) der Formel II mit den Kupplungskomponenten der Formel III erhalten werden:

| Bsp. Nr. | Formel II | Formel III | | Farbton |
|---|---|---|---|---|
| | R | X | Y | |
| 3 | $CH_3$ | H | H | rotstichiggelb |
| 4 | $CH_3$ | Cl | H | rotstichiggelb |
| 5 | $CH_3$ | $OC_2H_5$ | H | orange |
| 6 | $CH_3$ | $CH_3$ | H | rotstichiggelb |
| 7 | $CH_3$ | Cl | Cl | gelb |
| 8 | $CH_3$ | $OCH_3$ | $OCH_3$ | gelbstichigbraun |
| 9 | $CH_3$ | $CH_3$ | $CH_3$ | gelbstichigorange |
| 10 | $C_2H_5$ | Cl | H | rotstichiggelb |
| 11 | $C_2H_5$ | $CH_3$ | H | gelbstichigorange |
| 12 | $C_2H_5$ | $OCH_3$ | H | orange |
| 13 | $C_2H_5$ | Cl | Cl | grünstichiggelb |
| 14 | $C_2H_5$ | $CH_3$ | $CH_3$ | gelbstichigorange |
| 15 | $C_2H_5$ | $OCH_3$ | $OCH_3$ | gelbstichigbraun |
| 16 | $C_2H_5$ | Br | H | rotstichiggelb |
| 17 | $CH_3$ | $OCH_3$ | $CH_3$ | orange |
| 18 | n-$C_3H_7$ | H | H | rotstichiggelb |
| 19 | n-$C_4H_9$ | H | H | rotstichiggelb |
| 20 | $CH_3$ | Cl | $OCH_3$ | gelbstichigorange |
| 21 | $C_2H_5$ | $C_2H_5$ | H | rotstichiggelb |
| 22 | $C_2H_5$ | Cl | $CH_3$ | gelb |

**Patentansprüche**

1. Disazoverbindungen der Formel I

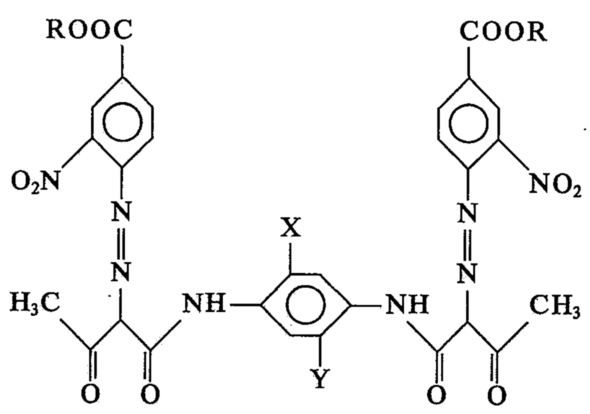

(I)

in der R einen Alkylrest mit 1 bis 4 C-Atomen, X und Y ein Wasserstoff-, Chlor- oder Bromatom, eine Methyl-, Ethyl-, Methoxy- oder Ethoxygruppe bedeuten.

2. Verfahren zur Herstellung der Disazoverbindungen I nach Anspruch 1, dadurch gekennzeichnet, daß man Verbindungen der Formel II

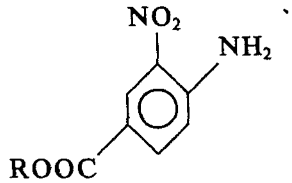

(II)

in der R die im Anspruch 1 genannte Bedeutung hat, diazotiert und zwei Äquivalente der erhaltenen Diazoniumverbindung oder des Gemisches zweier oder mehrerer Diazoniumverbindungen aus Verbindungen der Formel II mit einem Äquivalent einer Verbindung oder eines Gemisches zweier oder mehrerer Verbindungen der Formel III

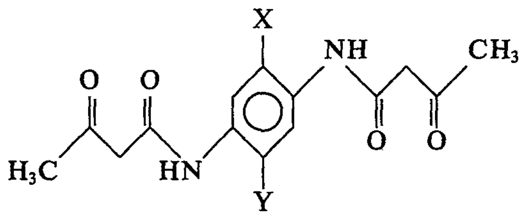

(III)

in der X und Y die in Anspruch 1 genannten Bedeutungen aufweisen, kuppelt.

3. Verwendung der Verbindungen gemäß Anspruch 1 als Farbmittel.

4. Verwendung der Verbindungen gemäß Anspruch 1 als Pigmente.

5. Verwendung der Verbindungen gemäß Anspruch 1 zum Färben bzw. Bedrucken von Kunststoffen, natürlichen und synthetischen Harzen, Kautschuk, Papier, Viskoseseide, Zelluloseestern bzw. -ethern, Polyolefinen, Polyurethanen, Polyacrilnitril oder Polyglykolterephthalaten sowie zur Herstellung von Druckfarben, Lackfarben oder Dispersionsanstrichfarben.

**Claims**

1. Disazo compounds of the formula I

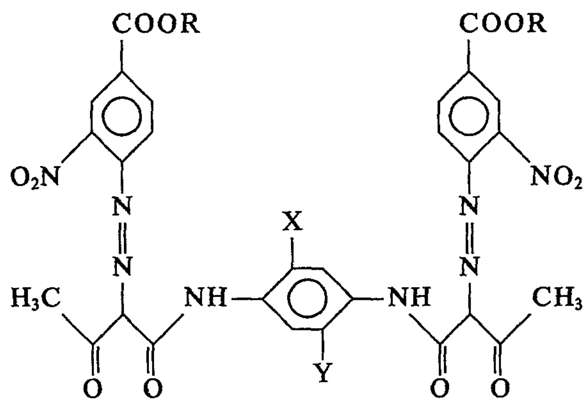

(I)

wherein R is alkyl of 1 to 4 carbon atoms and X and Y are hydrogen, chlorine, bromine, methyl, ethyl, methoxy or ethoxy.

2. Process for preparing the disazo compounds I according to claim 1, characterized by diazotizing compounds of the formula II

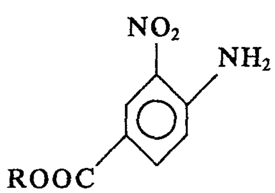

(II)

wherein R is defined as in claim 1, and coupling two equivalents of the diazonium compound or of a mixture of two or several diazonium compounds obtained from compounds of the formula II onto one equivalent of a compound or of a mixture of two or several compounds of the formula III

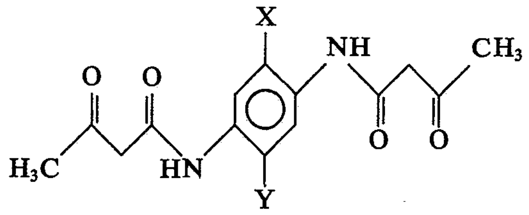

(III)

wherein X and Y are defined as in claim 1.

3. Use of the compounds according to claim 1 as colorants.

4. Use of the compounds according to claim 1 as pigments.

5. Use of the compounds according to claim 1 for the dyeing of or printing on plastics, natural or synthetic resins, rubber, paper, viscose rayon, cellulose esters or ethers, polyolefines, polyurethanes, polyacrylonitrile or polyglycolterephthalates as well as for preparing printing inks, paints or emulsion paints.

**Revendications**

1. Composés bis-azoiques répondant à la formule (I):

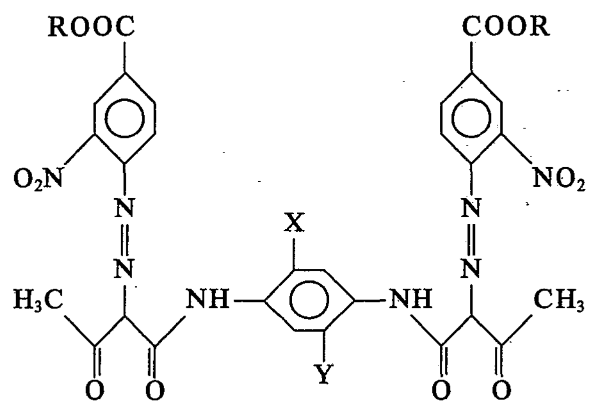

(I)

dans laquelle R représente un radical alkyle contenant de 1 à 4 atomes de carbone, et X et Y représentent chacun un atome d'hydrogène, de chlore ou de brome ou un radical méthyle, éthyle, méthoxy ou éthoxy.

2. Procédé de préparation des composés bis-azoïques de formule (I) selon la revendication 1, procédé caractérisé en ce qu'on diazote des composés répondant à la formule (II):

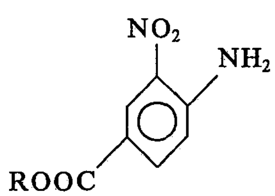

(II)

dans laquelle R a la signification donnée à la revendication 1, et on copule 2 équivalents du composé diazoïque obtenu, ou du mélange de deux ou de plus de deux diazoïques de composés de formule (II), avec 1 équivalent d'un composé ou d'un mélange de deux ou de plus de deux composés répondant à la formule (III):

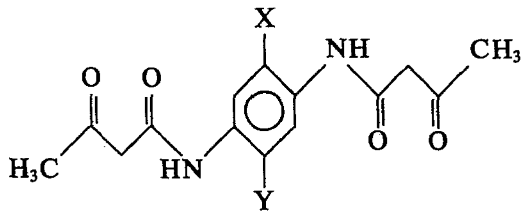

(III)

dans laquelle X et Y ont les significations données à la revendication 1.

3. Application des composés selon la revendication 1, comme matières colorantes.

4. Application des composés selon la revendication 1, comme pigments.

5. Application des composés selon la revendication 1, pour la teinture ou l'impression de matières plastiques, de résines naturelles ou synthétiques, de caoutchoucs, du papier, de la rayonne viscose, d'esters ou d'éthers de la cellulose, de polyoléfines, de polyuréthanes, du polyacrylonitrile ou de poly-(téréphtalates de glycols), ainsi que pour la préparation d'encres d'imprimerie, de vernis colorés et de peintures-dispersions.